# EUROPÄISCHE PATENTSCHRIFT

(11) **EP 2 878 181 B1**
(45) Veröffentlichungstag und Bekanntmachung des Hinweises auf die Patenterteilung: **05.09.2018**
(21) Anmeldenummer: 13742440.4
(22) Anmeldetag: 26.07.2013
(51) Int. Cl.: H05K 5/02, H05K 1/02

(54) **ELEKTRONIKMODUL MIT MANIPULATIONSSCHUTZ**
ELECTRONIC MODULE HAVING MANIPULATION PROTECTION
MODULE ÉLECTRONIQUE COMPRENANT UNE PROTECTION CONTRE LES MANIPULATIONS

(30) Priorität: 27.07.2012 DE 202012007236 U
(43) Veröffentlichungstag der Anmeldung: 03.06.2015
(73) Patentinhaber: Rosch Holding & Consulting GmbH, 82054 Sauerlach (DE)
(72) Erfinder: CZOBEL, Istvan, 81677 München (DE); SCHNEIDER, Robert, A-5020 Salzburg (AT)
(74) Vertreter: Prinz & Partner mbB
(86) Internationale Anmeldenummer: PCT/EP2013/065808
(87) Internationale Veröffentlichungsnummer: WO 2014/016411

(56) Entgegenhaltungen:
- EP-A1- 1 610 598
- DE-A1-102005 059 082
- US-A- 5 117 457
- US-A1- 2007 038 865

## Beschreibung

Die Erfindung betrifft ein manipulationsgeschütztes Elektronikmodul, insbesondere für die Durchführung sicherer Transaktionen (z. B. im bargeldlosen Zahlungsverkehr), die Verifizierung von Personen (z. B. im Zusammenhang mit dem elektronischen Personalausweis) oder ähnliche Anwendungen (z. B. im Zusammenhang mit der elektronischen Gesundheitskarte).

Es ist bekannt, elektronische Bauteile oder Schaltungen durch Vergießen mit einem Gießharz einzuschließen. Das Vergießen dient meist dem Schutz vor Umwelteinflüssen (Feuchtigkeit, Staub, etc.), der elektrischen Isolation oder der Erhöhung der mechanischen Stabilität der eingegossenen Teile. Eine weitere Anwendung ist der Schutz von elektronischen Bauteilen oder Schaltungen, in denen Operationen mit vertraulichen Daten durchgeführt werden, vor Manipulationen durch Dritte zu schützen.

Ein Elektronikmodul in Form einer Set-Top-Box mit den Merkmalen des Oberbegriffs des Anspruchs 1 ist aus der EP 1 610 598 A1 bekannt. Auf den oder die Bereiche mikroelektronischer Schaltungselemente oder Verdrahtungen ist ein hochmolekulares Material mit einem Epoxidharz und einem Aushärtemittel aufgebracht.

Die DE 10 2005 059 082 A1 gibt ein Verfahren an zum Vergießen elektrischer Komponenten, bei dem die elektrischen Komponenten in einem ersten Raum und einem zweiten Raum eines Gehäuses angeordnet sind. In den ersten Raum wird Vergussmasse gefüllt, während der zweiten Raum frei von Vergussmasse gehalten wird.

Die US 5 117 457 A zeigt ein gegen Eingriffe sicheres Gehäuse zum Schutz von in einer elektronischen Schaltung gespeicherten Informationen. Das Gehäuse umfasst eine Umhüllung, in welcher die elektronische Schaltung gelegen ist, eine dynamische Schutzeinrichtung zur Schaffung vorbestimmter Bedingungen in dem Bereich der die Schaltung umgebenden Umhüllung, und eine Sensoreinrichtung zum Erfassen vorhersagbarer Resultate von der dynamischen Schutzeinrichtung entsprechend den genannten Bedingungen, falls kein Eindringen in den Bereich erfolgt, und zum Erfassen des durch Abweichungen von den vorhersagbaren Resultaten repräsentierten Eindringens in den Bereich. Die dynamische Schutzeinrichtung enthält Mittel zum Ändern der vorbestimmten Bedingungen zu beliebigen einer Vielzahl von Bedingungen.

In der US 2007/038865 A1 ist eine manipulationssichere Abdeckung für ein Elektronikmodul gezeigt, die einen bestimmten Teilbereich einer größeren Anordnung abschirmen soll.

Aufgabe der Erfindung ist es, den Manipulationsschutz bei einem Elektronikmodul möglichst effektiv und kostengünstig zu gestalten.

Gelöst wird diese Aufgabe durch ein Elektronikmodul mit den Merkmalen des Anspruchs 1. Vorteilhafte und zweckmäßige Ausgestaltungen des erfindungsgemäßen Elektronikmoduls sind in den Unteransprüchen angegeben.

Das erfindungsgemäße manipulationsgeschützte Elektronikmodul ist für die Durchführung sicherer Transaktionen (z. B. im bargeldlosen Zahlungsverkehr), die Verifizierung von Personen (z. B. im Zusammenhang mit dem elektronischen Personalausweis) oder ähnliche Anwendungen (z. B. im Zusammenhang mit der elektronischen Gesundheitskarte) vorgesehen und umfasst eine Leiterplatte mit einer ersten Seite, auf der elektronische Bauteile einer elektronischen Schaltung einschließlich wenigstens eines Mikrochips wie ein ASIC oder ein Mikroprozessor, in dem Operationen mit Daten durchgeführt werden, angeordnet sind, und einen Gehäusedeckel, der der ersten Seite der Leiterplatte gegenüberliegt. Gemäß der Erfindung weist der Gehäusedeckel auf seiner Innenseite einen geschlossenen inneren Rahmen auf, der sich bis zur ersten Seite der Leiterplatte erstreckt und nur einen sicherheitsrelevanten Teilbereich der elektronischen Schaltung einschließlich des Mikrochips umgibt. Das zwischen der ersten Seite der Leiterplatte und dem Gehäusedeckel durch den inneren Rahmen eingeschlossene Volumen ist unter Bildung einer zusammenhängenden Vergussmasse mit einem Gießharz vergossen.

Die Erfindung beruht auf der Erkenntnis, dass es nicht zwingend erforderlich ist, die gesamte Schaltung einer oder mehrerer Leiterplatten vor Manipulationsversuchen zu schützen. Vielmehr ist es ausreichend, wenn diejenigen Teile der Schaltung, in denen sicherheitsrelevante Operationen mit vertraulichen Daten durchgeführt werden, gesichert sind. Durch geschickte Platzierung auf der Leiterplatte können diese Teile örtlich zu einem sicherheitsrelevanten Teilbereich der elektronischen Schaltung zusammengefasst werden. Gemäß der Erfindung ist es dank der Abgrenzung durch den inneren Rahmen möglich, gezielt nur diesen Bereich zu vergießen und damit unzugänglich zu machen. So kann im Vergleich zu einem Vergießen der gesamten Schaltung eine erhebliche Menge an Gießharz eingespart werden. Dies reduziert die Herstellungskosten des Elektronikmoduls, insbesondere im Hinblick auf eine Serienfertigung mit großen Stückzahlen. Durch die Verbindung der zusammenhängenden Vergussmasse mit der Leiterplatte und dem Gehäusedeckel wird dennoch ein sehr hoher Sicherheitsstandard erreicht, da ein Abheben des Gehäusedeckels von der Leiterplatte nicht ohne Weiteres möglich ist.

Gemäß der bevorzugten Ausführungsform des erfindungsgemäßen Elektronikmoduls weist die Leiterplatte an den Stellen, die dem inneren Rahmen unmittelbar gegenüberliegen, keine Erhöhungen auf. Dadurch ist im Falle einer ebenen Leiterplatte und einer ebenen Deckelfläche des Gehäusedeckels eine einfache Konstruktion mit einem inneren Rahmen möglich, der durchgängig die gleiche Höhe haben kann, um ein vollflächiges Aufliegen auf der Leiterplatte und damit eine bestmögliche Abdichtung zu gewährleisten.

Die Sicherheit vor Manipulationsversuchen kann noch dadurch erhöht werden, dass sich die Vergussmasse in einen Bereich zwischen dem Mikrochip und der ersten Seite der Leiterplatte erstreckt. Bei einem Versuch, den Gehäusedeckel von der Leiterplatte zu entfernen, wird der Mikrochip zwangsweise von der Leiterplatte gelöst, da die Vergussmasse unter dem Mikrochip mit der Vergussmasse, die am Gehäusedeckel klebt, zusammenhängt. Somit werden die Abzugskräfte äußerst effektiv auf den Mikrochip übertragen.

Eine weitere Sicherheitsmaßnahme der Erfindung sieht als Teil der elektronischen Schaltung eine lose gewickelte Spule vor, die im sicherheitsrelevanten Teilbereich angeordnet ist, wobei sich die Vergussmasse zwischen die Windungen der Spule erstreckt. Eine solche Spule, die keine besondere Aufgabe im Zusammenhang mit der eigentlichen Funktion des Elektronikmoduls erfüllen muss, kann als zuverlässiger Indikator für eine gewaltsame mechanische Einwirkung dienen. Da sich Vergussmasse zwischen den Windungen befindet, werden bei einer gewaltsamen mechanischen Einwirkung Windungen von der Spule abgerissen. Der ordnungsgemäße Zustand der Spule kann aber jederzeit auf einfache Weise durch die elektronische Schaltung kontrolliert werden, sodass ein Manipulationsversuch sofort erkennbar ist.

Damit das Gießharz beim Einspritzen in die oben genannten oder auch andere enge oder schwer zugängliche Bereiche vordringen kann, hat das Gießharz gemäß der Erfindung vor dem Aushärten eine Viskosität von weniger als 2,5 Pa·s, vorzugsweise von weniger als 2,0 Pa·s.

Bevorzugt wird als Gießharz ein Polyurethanharz verwendet, insbesondere ein Zwei-Komponenten-Gemisch aus einem Harz und einem Härter.

Gemäß einem besonderen Aspekt der Erfindung, der die Herstellung des erfindungsgemäßen Elektronikmoduls betrifft, weist die Leiterplatte innerhalb des sicherheitsrelevanten Teilbereichs wenigstens zwei Bohrungen auf, die sich von der ersten Seite bis zur entgegengesetzten zweiten Seite der Leiterplatte erstrecken. Die Bohrungen ermöglichen auf einfache Weise ein widerstandsloses Einspritzen des Gießharzes in den sicherheitsrelevanten Teilbereich, der ansonsten durch den inneren Rahmen, die Leiterplatte und den Gehäusedeckel hermetisch abgeschlossen wäre. So kann aber, während das Gießharz durch die eine Bohrung eingebracht wird, die Luft im abgeschlossenen Bereich gleichzeitig durch die andere Bohrung entweichen. Könnte das eingeschlossene Luftvolumen nicht entweichen, würde dies das weitere Einspritzen von Gießharz behindern oder sogar unmöglich machen.

Die Erfindung wird nachfolgend anhand einer bevorzugten Ausführungsform unter Bezugnahme auf die beigefügten Zeichnungen beschrieben. In den Zeichnungen zeigen:
- Figur 1 eine Draufsicht auf die Innenseite eines Gehäusedeckels eines erfindungsgemäßen Elektronikmoduls; und
- Figur 2 eine Draufsicht auf ein fertig montiertes erfindungsgemäßes Elektronikmodul ohne Gehäusedeckel.

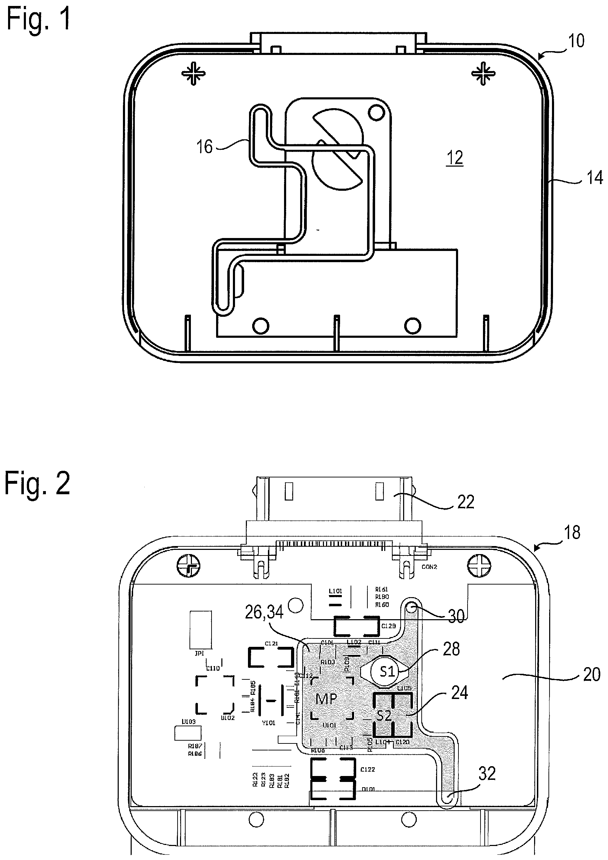

In Figur 1 ist ein Gehäusedeckel 10 eines Elektronikmoduls dargestellt, das für den Einsatz im bargeldlosen Zahlungsverkehr vorgesehen ist. Der Gehäusedeckel 10 besteht im Wesentlichen aus Kunststoff und kann in einem Spritzgussverfahren hergestellt werden. Der Gehäusedeckel 10 weist eine geschlossene Deckelfläche 12 mit einem äußeren Rahmen 14 auf, der sich gemäß der Darstellung in Figur 1 innenseitig von der Papierebene nach oben erstreckt. Der am äußeren Rand der Deckelfläche 12 umlaufende Rahmen 14 ist nur an einer Stelle für den Durchtritt eines Steckverbinders unterbrochen.

Abgesehen vom äußeren Rahmen 14 weist der Gehäusedeckel 10 noch einen geschlossenen inneren Rahmen 16 auf, der keine Unterbrechungen hat. Der innere Rahmen 16 erstreckt sich ebenso wie der äußere Rahmen 14 innenseitig von der Deckelfläche 12 nach oben und hat eine konstante Höhe. Auf die spezielle Anordnung und den speziellen Verlauf (Form) des inneren Rahmens 16 wird später noch eingegangen. Der innere Rahmen 16 und weitere Erhöhungen, Halte- und/oder Positionierelemente des Gehäusedeckels 10 bilden eine Tragstruktur für eine Leiterplatte.

Figur 2 zeigt einen zum Gehäusedeckel 10 der Figur 1 passenden Gehäuseboden 18 und eine Leiterplatte 20 im fertig montierten Zustand des Elektronikmoduls. Der Gehäusedeckel 10, der sich in diesem Zustand im Vergleich zur Darstellung von Figur 1 mit der Innenseite nach unten über dem Gehäuseboden 18 und der Leiterplatte 20 befindet, wurde in Figur 2 weggelassen, um das Innenleben des Elektronikmoduls sichtbar zu machen.

Die Leiterplatte 20 weist eine elektronische Schaltung mit mehreren elektronischen Bauteilen auf, einschließlich eines Steckverbinders 22, der durch die Unterbrechung des äußeren Rahmens 14 des Gehäusedeckels 10 nach außen ragt. Die Mehrzahl der elektronischen Bauteile und Leitungen der Schaltung befinden sich auf der in Figur 2 sichtbaren Seite der Leiterplatte 20, die dem Gehäusedeckel 10 im montierten Zustand des Elektronikmoduls gegenüberliegt (nachfolgend als erste Seite der Leiterplatte 20 bezeichnet). Im montierten Zustand berührt der innere Rahmen 16 des Gehäusedeckels 10 über seine gesamte Länge die erste Seite der Leiterplatte 20. An den Berührungsstellen hat die Leiterplatte 20 keine Erhöhungen, sodass der innere Rahmen 16 vollflächig auf der Leiterplatte 20 aufliegen kann.

Der innere Rahmen 16 grenzt einen besonderen Bereich auf der ersten Seite der Leiterplatte 20 ab. Innerhalb dieses Bereichs befindet sich unter anderem ein Mikrochip 24 (z. B. ein ASIC oder ein Mikroprozessor), in dem Operationen mit vertraulichen Daten durchgeführt werden. Der abgegrenzte Bereich kann somit als sicherheitsrelevanter Teilbereich 26 der elektronischen Schaltung bezeichnet werden. Im sicherheitsrelevanten Teilbereich 26 der elektronischen Schaltung ist auch eine lose gewickelte Spule 28 angeordnet. Die Leiterplatte 20 weist innerhalb des sicherheitsrelevanten Teilbereichs 26 zwei Bohrungen 30, 32 auf, die sich von der ersten Seite bis zur entgegengesetzten zweiten Seite der Leiterplatte 20 erstrecken.

Im Folgenden werden die wesentlichen Schritte des Zusammenbaus des Elektronikmoduls erläutert. Zunächst wird die Leiterplatte 20 so auf die Tragstruktur des Gehäusedeckels 10 aufgesetzt, dass der innere Rahmen 16 flächig auf der Leiterplatte 20 zu liegen kommt und den sicherheitsrelevanten Teilbereich 26 der elektronischen Schaltung umgibt.

Durch eine der Bohrungen 30, 32 in der Leiterplatte 20 wird dann ein Gießharz eingespritzt, bis das Volumen innerhalb des inneren Rahmens 16, das oben und unten durch den Gehäusedeckel 10 bzw. die Leiterplatte 20 begrenzt ist, vollständig mit Gießharz ausgefüllt ist. Die andere Bohrung 32 bzw. 30 ermöglicht beim Einspritzen des Gießharzes, dass die im Volumen eingeschlossene Luft verdrängt wird. Nach dem Aushärten des Gießharzes hat sich eine feste, zusammenhängende Vergussmasse 34 gebildet, die keinen unmittelbaren Zugang zum sicherheitsrelevanten Teilbereich 26 der elektronischen Schaltung erlaubt.

Als Gießharz wird ein Polyurethanharz verwendet, das aus zwei Komponenten, einem Harz und einem Härter, zusammengemischt wird. Vor dem Aushärten hat das Gießharz eine Viskosität von weniger als 2,5 Pa·s, vorzugsweise von weniger als 2,0 Pa·s. Die niedrige Viskosität des Gießharzes beim Einspritzen führt dazu, dass das Gießharz auch in den Bereich zwischen dem Mikrochip 24 und der ersten Seite der Leiterplatte 20 eindringt und dass auch dieser Bereich Teil der zusammenhängenden Vergussmasse 34 wird. Ebenso kann das Gießharz zwischen die Windungen der lose gewickelten Spule 28 eindringen und dort aushärten.

Nach dem Aushärten des Gießharzes wird der Gehäusedeckel 10 mit der Leiterplatte 20 auf den Gehäuseboden 18 aufgesetzt, sodass die Leiterplatte 20 vollständig von dem durch den Gehäuseboden 18 und den Gehäusedeckel 10 gebildeten Gehäuse umgeben ist.

Bei einem Manipulationsversuch kann zwar der Gehäuseboden 18 vom Gehäusedeckel 10 und der Leiterplatte 20 entfernt werden; ein Abheben des Gehäusedeckels 10 von der Leiterplatte 20 ist jedoch nicht ohne Weiteres möglich, da diese durch die Vergussmasse 34 fest miteinander verbunden sind. Wird dies dennoch versucht, führt das Ziehen am Gehäusedeckel 10 unweigerlich zur Zerstörung des sicherheitsrelevanten Teilbereichs 26 der elektronischen Schaltung. Insbesondere wird bei einem solchen Versuch aufgrund der zusammenhängenden Vergussmasse 34 der Mikrochip 24 von der Leiterplatte 20 heruntergerissen, und es reißen Windungen von der Spule 28 ab. Die Zerstörung der Spule 28 lässt sich elektronisch leicht durch eine Widerstandsmessung oder dergleichen in regelmäßigen Abständen abfragen, sodass nach der Zerstörung sofort auf einen Manipulationsversuch geschlossen und entsprechend reagiert werden kann.

Die in der Beschreibung und in den nachfolgenden Ansprüchen verwendeten Begriffe "Gehäusedeckel", "Gehäuseboden", etc. sowie Richtungs-/Positionsangaben wie "oben", "unten", etc. sind nicht einschränkend zu verstehen; sie wurden lediglich zur besseren Unterscheidung so gewählt.

### Bezugszeichenliste

- 10: Gehäusedeckel
- 12: Deckelfläche
- 14: äußerer Rahmen
- 16: innerer Rahmen
- 18: Gehäuseboden
- 20: Leiterplatte
- 22: Steckverbinder
- 24: Mikrochip
- 26: sicherheitsrelevanter Teilbereich
- 28: Spule
- 30: Bohrung
- 32: Bohrung
- 34: Vergussmasse

## Patentansprüche

1. Manipulationsgeschütztes Elektronikmodul für die Durchführung sicherer Transaktionen, die Verifizierung von Personen oder ähnliche Anwendungen, umfassend:
eine Leiterplatte (20) mit einer ersten Seite, auf der elektronische Bauteile einer elektronischen Schaltung einschließlich wenigstens eines Mikrochips (24)wie ein ASIC oder ein Mikroprozessor, in dem Operationen mit Daten durchgeführt werden, angeordnet sind, und
einen Gehäusedeckel (10), der der ersten Seite der Leiterplatte (20) gegenüberliegt,
wobei der Gehäusedeckel (10) auf seiner Innenseite einen geschlossenen inneren Rahmen (16) aufweist, der sich bis zur ersten Seite der Leiterplatte (20) erstreckt und nur einen sicherheitsrelevanten Teilbereich (26) der elektronischen Schaltung einschließlich des Mikrochips (24) umgibt,
wobei das zwischen der ersten Seite der Leiterplatte (20) und dem Gehäusedeckel (10) durch den inneren Rahmen (16) eingeschlossene Volumen unter Bildung einer zusammenhängenden Vergussmasse (34) mit einem Gießharz vergossen ist, und
wobei die Schaltung im sicherheitsrelevanten Teilbereich (26) eine lose gewickelte Spule (28) aufweist und sich die Vergussmasse (34) zwischen die Windungen der Spule (28) erstreckt,
**dadurch gekennzeichnet, dass** das Gießharz vor dem Aushärten eine Viskosität von weniger als 2,5 Pa·s, vorzugsweise von weniger als 2,0 Pa·s hat.

2. Elektronikmodul nach Anspruch 1, **dadurch gekennzeichnet, dass** die Leiterplatte (20) an den Stellen, die dem inneren Rahmen (16) unmittelbar gegenüberliegen, keine Erhöhungen aufweist.

3. Elektronikmodul nach Anspruch 1 oder 2, **dadurch gekennzeichnet, dass** sich die Vergussmasse (34) in einen Bereich zwischen dem Mikrochip (24) und der ersten Seite der Leiterplatte (20) erstreckt.

4. Elektronikmodul nach einem der vorhergehenden Ansprüche, **dadurch gekennzeichnet, dass** das Gießharz ein Polyurethanharz ist, vorzugsweise ein Zwei-Komponenten-Gemisch aus einem Harz und einem Härter.

5. Elektronikmodul nach einem der vorhergehenden Ansprüche, **dadurch gekennzeichnet, dass** die Leiterplatte (20) innerhalb des sicherheitsrelevanten Teilbereichs (26) wenigstens zwei Bohrungen (30, 32) aufweist, die sich von der ersten Seite bis zur entgegengesetzten zweiten Seite der Leiterplatte (20) erstrecken.

## Claims

1. A tamper-proof electronic module for carrying out secure transactions, for the verification of individuals or similar applications, comprising:
a printed circuit board (20) having a first side, on which electronic components of an electronic circuit including at least one microchip (24) such as an ASIC or a microprocessor, in which operations involving data are carried out, are arranged, and
a housing cover (10) facing the first side of the printed circuit board (20),
the housing cover (10) having, on the inside thereof, a sealed inner frame (16) that extends to the first side of the printed circuit board (20) and surrounds only a security-relevant portion (26) of the electronic circuit including the microchip (24),
the volume enclosed by the inner frame (16) between the first side of the printed circuit board (20) and the housing cover (10) being filled with a casting resin with the formation of a coherent casting compound (34), and
the circuit including a loosely wound coil (28) in the security-relevant portion (26), and the casting compound (34) extending between the turns of the coil (28),
**characterized in that** prior to curing, the casting resin has a viscosity of less than 2.5 Pa·s, preferably less than 2.0 Pa·s.

2. The electronic module according to claim 1, **characterized in that** the printed circuit board (20) does not include any elevations at the locations that are directly facing the inner frame (16).

3. The electronic module according to claim 1 or 2, **characterized in that** the casting compound (34) extends into an area between the microchip (24) and the first side of the printed circuit board (20).

4. The electronic module according to any one of the preceding claims, **characterized in that** the casting resin is a polyurethane resin, preferably a two-component mixture of a resin and a curing agent.

5. The electronic module according to any one of the preceding claims, **characterized in that** the printed circuit board (20) has at least two drilled holes (30, 32) within the security-relevant portion (26), which extend from the first side to the opposite, second side of the printed circuit board (20).

## Revendications

1. Module électronique protégé contre les manipulations pour la réalisation de transactions sûres, la vérification de personnes ou d'autres applications, comprenant :
une carte de circuits imprimés (20) qui présente une première face sur laquelle sont agencés des composants électroniques d'un circuit électronique incluant au moins une mircopuce (24) telle qu'un ASIC ou un microprocesseur dans lequel des opérations avec des données sont réalisées, et
un couvercle de boîtier (10) agencé en face de la première face de la carte de circuits imprimés (20),
le couvercle de boîtier (10) présentant sur sa face intérieure un cadre (16) intérieur fermé qui s'étend jusqu'à la première face de la carte de circuits imprimés (20) et qui entoure uniquement une zone partielle (26) relative à la sécurité du circuit électronique incluant la micropuce (24),
le volume renfermé par le cadre intérieur (16) entre la première face de la carte de circuits imprimés (20) et le couvercle de boîtier (10) étant scellé par une résine de coulée en formant une masse de scellement (34) cohérente, et
le circuit dans la zone partielle (26) relative à la sécurité présentant une bobine (28) enroulée de manière lâche, et la masse de scellement (34) s'étendant entre les enroulements de la bobine (28),
**caractérisé en ce que** la résine de coulée présente une viscosité inférieure à 2,5 Pa, de préférence inférieure à 2,0 Pa avant le durcissement.

2. Module électronique selon la revendication 1, **caractérisé en ce que** la carte de circuits imprimés (20) ne présente pas de bossages aux endroits qui sont directement ménagés en face du cadre intérieur (16).

3. Module électronique selon la revendication 1 ou 2, **caractérisé en ce que** la masse de scellement (34) s'étend dans une zone entre la micropuce (24) et la première face de la carte de circuits imprimés (20).

4. Module électronique selon l'une des revendications précédentes, **caractérisé en ce que** la résine de coulée est une résine de polyuréthane, de préférence un mélange à deux composants composé d'une résine et d'un durcisseur.

5. Module électronique selon l'une des revendications précédentes, **caractérisé en ce que** la carte de circuits imprimés (20) à l'intérieur de la zone partielle (26) relative à la sécurité présente au moins deux orifices (30, 32) qui s'étendent depuis la première face jusqu'à la deuxième face opposée de la carte de circuits imprimés (20).
